# EUROPÄISCHE PATENTSCHRIFT

(11) **EP 4 560 524 B1**
(45) Veröffentlichungstag und Bekanntmachung des Hinweises auf die Patenterteilung: **31.12.2025**
(21) Anmeldenummer: 23211783.8
(22) Anmeldetag: 23.11.2023
(51) Int. Cl.: G06K 7/14

(54) **OPTISCHER SENSOR**
OPTICAL SENSOR
CAPTEUR OPTIQUE

(43) Veröffentlichungstag der Anmeldung: 28.05.2025
(73) Patentinhaber: Leuze electronic GmbH + Co KG, 73277 Owen/Teck (DE)
(72) Erfinder: Sanzi, Friedrich, 73230 Kirchheim/Teck (DE); Quapil, Gerald, 73277 Owen/Teck (DE); Sanzi, Janina, 73230 Kirchheim (DE)
(74) Vertreter: Ruckh, Rainer Gerhard

(56) Entgegenhaltungen:
- EP-A1- 3 428 834
- DE-A1- 102018 109 392
- US-A1- 2016 125 218

## Beschreibung

Die Erfindung betrifft einen optischen Sensor und ein Verfahren zur Erfassung von Codes mittels eines optischen Sensors.

Derartige optische Sensoren werden typischerweise zur Erfassung von Codes, wie z.B. von Barcodes, eingesetzt. Die optischen Sensoren weisen typischerweise einen Bildsensor mit einer zugeordneten Beleuchtungseinheit auf. Befindet sich ein Code im Sichtfeld des optischen Sensors wird dieser auf dem Bildsensor des optischen Sensors abgebildet. Das Bild des Codes wird in eine Auswerteeinheit des optischen Sensors eingelesen, wo anhand dieses Bildes die Decodierung des Codes erfolgt.

Voraussetzung für eine erfolgreiche Decodierung des Codes ist, dass dessen Kontrastmuster hinreichend scharf auf dem Bildsensor des optischen Sensors abgebildet werden. Bei Barcodes bestehen die Kontrastmuster aus einer Folge von aneinander angrenzenden hellen und dunklen Flächenelementen, wobei die Flächenelemente durch abrupte Hell-/Dunkelübergänge getrennt sind.

Ein Problem bei der Erfassung der Codes entsteht generell dann, wenn die Codes mit einer Geschwindigkeit relativ zum optischen Sensor bewegt werden. Durch diese Relativbewegung entsteht bei der Bildaufnahme der Codes eine Bewegungsunschärfe, die bei gleichen Aufnahmebedingungen umso größer ist, je größer die Geschwindigkeit ist. Bei einem mit einer Bewegungsunschärfe behafteten Bild des Codes auf dem Bildsensor verschwimmen und verschmieren die Kontrastmuster, das heißt die Hell-/Dunkelübergänge in den Kontrastmustern werden nicht mehr scharf abgebildet. Damit aber können die Kontrastmuster des Codes in den mit dem Bildsensor aufgenommenen Bildern in der Auswerteeinheit nicht mehr aufgelöst, das heißt voneinander unterschieden werden, so dass eine Decodierung der Codes nicht mehr möglich ist.

Somit ist die Erfassung von Codes mittels des optischen Sensors auf relativ geringe Relativgeschwindigkeiten zwischen Codes und optischen Sensors begrenzt, wodurch die Anwendungsmöglichkeiten des optischen Sensors stark eingeschränkt sind.

Die EP 3 217 315 B1 betrifft einen optischen Sensor mit einem Bildsensor zur Erfassung von Codes und mit einer Auswerteeinheit, welcher von dem Bildsensor generierte, Codes enthaltende Bilder zugeführt sind, wobei in der Auswerteeinheit die Bilder zur Decodierung der Codes ausgewertet werden, und wobei die Auswerteeinheit ein Filter aufweist, in welchem eine durch eine Relativgeschwindigkeit der Codes zum optischen Sensor bedingte, in den Bildern der Codes enthaltene Bewegungsunschärfe reduziert wird. Dem Filter ist eine Eingangsgröße zugeführt, die ein Maß für den Geschwindigkeitsvektor der Relativbewegung des Codes zum optischen Sensor ist, und wobei anhand dieser Eingangsgröße eine Dimensionierung des Filters erfolgt. Weiterhin ist eine der Auswerteeinheit zugeordnete Eingabeeinheit vorgesehen, über welche der Geschwindigkeitsvektor als Eingabegröße eingebbar ist. Alternativ wird die Eingabegröße in einem Einlernvorgang bestimmt.

Mittels des Filters kann zwar prinzipiell die Bewegungsunschärfe in Codes enthaltenen Bildern des Bildsensors reduziert werden. Dies gilt jedoch nicht allgemein. Vielmehr gibt es Parameterbereiche von Geschwindigkeiten des Codes relativ zum optischen Sensor sowie von Modulgrößen von Codes, bei welchen keine oder nur eine nicht ausreichende Reduzierung der Bewegungsunschärfe möglich ist. Zudem besteht ein Nachteil darin, dass bei dem Einsatz von derartigen Filtern Bildartefakte auftreten können, die die Codeerkennung erschweren oder sogar unmöglich machen.

Der Erfindung liegt die Aufgabe zugrunde, einen optischen Sensor der eingangs genannten Art bereitzustellen, mit dem auch relativ zum optischen Sensor bewegte Codes sicher erfasst werden können.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Verfahren zur Erfassung von Codes mittels eines optischen Sensors mit einem Bildsensor, mittels dessen Bilder von Codes aufgenommen werden, und mit einer einen Decoder aufweisenden Auswerteeinheit. Im Decoder wird eine Decodierung von mit dem Bildsensor erfassten Codes durchgeführt. Die Auswerteeinheit weist ein Machine-Learning-Modell mit wenigstens einem neuronalen Netz auf. Das neuronale Netz wird in einem Einlernbetrieb mit Trainingsdaten trainiert. Mit dem Machine-Learning-Modell wird eine durch eine Relativbewegung eines erfassten Codes relativ zum optischen Sensor verursachte Bewegungsunschärfe in einem Bild des Codes nach Betrag und Phase als Zwischengröße bestimmt. Mit dieser Zwischengröße wird im Machine-Learning-Modell durch eine Entfaltung die im Bild des Codes enthaltene Bewegungsunschärfe kompensiert. Das dadurch gewonnene bearbeitete Bild des Codes wird dem Decoder zugeführt.

Die Erfindung betrifft auch ein entsprechendes Verfahren.

Mit dem erfindungsgemäßen optischen Sensor können Codes auch dann sicher erfasst werden, wenn diese relativ zum optischen Sensor bewegt werden.

Dabei können mit dem optischen Sensor unterschiedliche Codes, insbesondere 1D-Codes wie Barcodes oder 2D-Codes, erfasst werden. Generell weisen die Codes Kontrastmuster mit hellen und dunklen Modulen auf, wobei das kleinste Modul als Modulbreite bezeichnet wird.

Ein wesentlicher Aspekt der Erfindung besteht darin, dass die Auswerteeinheit ein Machine-Learning-Modell mit einem oder mehreren neuronalen Netzen aufweist. Das oder mehrere oder alle neuronalen Netze werden in einem Einlernbetrieb trainiert.

Insbesondere enthalten die Trainingsdaten Eingangsdaten in Form von mit dem Bildsensor erfassten Bildern oder simulierten Bildern und Soll-Ausgangsdaten. Das Training erfolgt durch eine zu minimierende Verlustfunktion.

Die Verlustfunktion berechnet sich aus der Differenz der tatsächlichen Ausgangsdaten und der Soll-Ausgangsdaten.

Die Bilder enthalten insbesondere Codes, die mit unterschiedlichen Geschwindigkeiten relativ zum optischen Sensor bewegt sind, so dass die Codes enthaltenden Bilder unterschiedliche Bewegungsunschärfe aufweisen.

Durch das Training kann ein neuronales Netz auch auf schwierige Umgebungsbedingungen angepasst werden, wie z.B. verschiedene Geschwindigkeiten, verschiedene Richtungen der Geschwindigkeiten, schlechte Beleuchtung, Störungen im Hintergrund, Störrauschen, problematischer Hintergrund. Es ist auch möglich, ein Training speziell auf eine Kundenapplikation anzupassen. Das Training erfolgt in dem Fall mit Bildern aus der Kundenapplikation, wodurch das neuronale Netz auf die Eigenarten dieser Kundenapplikation angepasst wird.

Durch eine große Menge und eine große Vielfalt an Trainingsdaten kann das neuronale Netz auf viele Problemfälle trainiert werden und sich an schwierige Situationen anpassen.

Mit den so trainierten neuronalen Netzen des Machine-Learning-Modells kann in Codes enthaltenden Bildern des Bildsensors die durch eine Relativgeschwindigkeit zwischen Code und optischem Sensor verursachte Bewegungsunschärfe nach Betrag und Phase als Zwischengröße bestimmt werden.

Mit dieser Zwischengröße erfolgt eine Entfaltung des aufgenommenen Bilds und damit eine Kompensation der darin enthaltenen Bewegungsunschärfe.

Die Kompensation der Bewegungsunschärfe erfolgt ohne Gefahr des Auftretens von Artefakten und kann insbesondere für unterschiedliche Relativgeschwindigkeiten zwischen dem optischen Sensor und den erfassten Codes durchgeführt werden.

Die Decodierung der so bearbeiteten Bilder im Decoder kann damit nahezu ohne Fehllesungen durchgeführt werden, wodurch eine hohe Detektionsrate bei der Codeerfassung erzielt wird.

Vorteilhaft ist das Machine-Learning-Modell in Form von Softwaremodulen ausgebildet. Die Auswerteeinheit weist zweckmäßig eine an die Machine-Learning-Modelle angepasste Prozessorstruktur auf.

Zur Erstellung der Softwaremodule kann als Programmiersprache Python, als Entwicklungsumgebung Jupyter Lab und als Framework Tensorflow und Py Torch genutzt werden.

Die an das Machine-Learning-Modell angepasste Prozessorstruktur kann insbesondere in Form von Neural Processing Units (NPU) gebildet sein. Generell können auch Prozessoren wie CPU, GPU, FPGA und ASIC eingesetzt werden.

Vorteilhaft sind Prozessorstrukturen vorhanden, die an die in den Faltungsnetzen typischen Berechnungen angepasst sind. Um die neuronalen Netze besonders recheneffizient einzusetzen, können nach oder während dem Training und vor dem Einsatz der neuronalen Netze Optimierungen vorgenommen werden (Quantisierung, Festkommaarithmetik anstatt Gleitkommaarithmetik, Layer Fusion, Pruning und weitere bei neuronalen Netzen typische Ansätze, um die Rechenzeit und Größe zu reduzieren). Durch Layer Fusion und Pruning wird die Komplexität der neuronalen Netze reduziert, d.h. die Anzahl der benötigten Multiplikationen verringert sich. Durch Quantisierung und die Verwendung von Festkommaarithmetik wird eine schnellere Ausführung der Operationen erzielt und zusätzlich verringert sich der Speicherbedarf für die Netzparameter.

Gemäß einer vorteilhaften Ausführungsform wird mit dem Machine-Learning-Modell eine Schätzung der Bewegungsunschärfe und/oder einer Code-Modulgröße eines erfassten Codes durchgeführt, um die Entfaltung mit vermindertem Rechenaufwand durchzuführen.

Durch derartige Schätzalgorithmen kann gegenüber exakten Berechnungen der zugeordneten Größen eine erhebliche Einsparung an Rechenzeit erzielt werden.

Vorteilhaft weist das Machine-Learning-Modell neuronale Netze in Form von CNN, FCN und/oder DSTN auf.

Gemäß einer zweckmäßigen und einfachen Ausgestaltung weist das Machine-Learning-Modell ein einzelnes CNN oder eine Reihenanordnung bestehend aus zwei CNN auf.

In der einfachsten Ausbildung weist das Machine-Learning-Modell nur ein neuronales Netz insbesondere in Form eines CNN auf.

Bei dem CNN handelt es sich um ein Faltungsnetz, in dem Operationen wie Faltungen, Max Pooling, Aktivierungsfunktionen oder Normalisierungen durchgeführt werden, wobei hierzu unterschiedliche Schichten im CNN vorgesehen sind. Pooling-Operationen dienen zur Reduzierung der Größen von Bildern unter Erhaltung wesentlicher Bildmerkmale, d.h. mit einem Max Pooling wird die Auflösung von Bildern reduziert.

Bei einer Struktur mit zwei in Reihe angeordneten neuronalen Netze kann mit einem ersten CNN die Auflösung von Bildern des Bildsensors, z.B. durch Max-Pooling Operationen, reduziert werden, wobei in dem zweiten CNN die Auflösung durch ein Upsampling oder Transposed Convolution wieder erhöht werden kann, d.h. das erste CNN kann als Encoder, das zweite CNN als Decoder aufgefasst werden.

Gemäß einer vorteilhaften Weiterbildung ist dem CNN oder der Reihenanordnung der CNN ein ein Classifier bildendes neuronales Netz nachgeordnet.

Die in dem oder den CNN bearbeiteten Bilder werden anschließend im Classifier in Hell- bzw. Dunkelbereiche klassifiziert, so dass ein ideales Schwarz-Weiß-Bild erhalten wird, das besonders gut im Decoder decodiert werden kann.

Gemäß einer besonders vorteilhaften Ausführungsform wird in einem Bild eines Codes mittels eines ersten neuronalen Netzes die Bewegungsunschärfe nach Betrag und Phase in einem Bild des Bildsensors ermittelt. Mit diesem neuronalen Netz wird abhängig von der ermittelten Bewegungsunschärfe aus einer Anordnung von weiteren neuronalen Netzen ein neuronales Netz ausgewählt, mit dem die Entfaltung durchgeführt wird.

Dabei werden zweckmäßig die weiteren neuronalen Netze für unterschiedliche Bewegungsunschärfe-Bereiche trainiert.

Abhängig von der ermittelten Bewegungsunschärfe wird das für diese Bewegungsunschärfe am besten geeignete weitere neuronale Netze ausgewählt, wodurch eine optimierte Kompensation der Bewegungsunschärfe und eine dementsprechend sichere Decodierung des im jeweiligen Bild des Bildsensors enthaltenen Codes gewährleistet ist.

Da mehrere weitere neuronale Netze vorhanden sind, wird mit diesen ein großer Bereich der Bewegungsunschärfe abgedeckt, so dass für einen breiten Bereich der Bewegungsunschärfe eine zuverlässige Decodierung der Codes gewährleistet ist.

Gemäß einer weiteren vorteilhaften Ausführungsform wird in einem Bild eines Codes mittels eines ersten neuronalen Netzes in einem Bild des Bildsensors die Anzahl pₘ von Pixeln auf einem Modul eines Codes in dem Bildsensor ermittelt. Mit diesem neuronalen Netz wird abhängig von der ermittelten Anzahl pₘ aus einer Anordnung von weiteren neuronalen Netzen ein neuronales Netz ausgewählt, mit dem die Entfaltung durchgeführt wird.

Dabei werden zweckmäßig die weiteren neuronalen Netze für unterschiedliche pₘ-Wertebereiche trainiert.

Der Wert pₘ kennzeichnet die Abbildung eines Codes auf dem Bildsensor.

Abhängig von der ermittelten Anzahl pₘ wird das für diese Anzahl am besten geeignete weitere neuronale Netz ausgewählt, wodurch eine Anpassung an die Abbildung des Codes auf dem Bildsensor und eine dementsprechend sichere Decodierung des im jeweiligen Bild des Bildsensors enthaltenen Codes gewährleistet ist.

Da mehrere weitere neuronale Netze vorhanden sind, wird mit diesen ein großer Abbildungsbereich abgedeckt, wobei für diesen Abbildungsbereich eine zuverlässige Decodierung der Codes gewährleistet ist.

Generell ist auch eine Kombination der beiden vorgenannten Ausführungsformen möglich.

Schließlich können die beiden vorgenannten Ausführungsformen dahingehend erweitert sein, dass zusätzlich oder anstatt zu den weiteren neuronalen Netzen Filter vorgesehen sind, die einzeln auswählbar sind.

Mit der kombinierten Anordnung von auswählbaren weiteren neuronalen Netzen und/oder diesen zugeordneten Filtern gelingt eine weitere Reduzierung des Rechenaufwands. Die Filter können im Ortsbereich oder im Ortsfrequenzbereich realisiert sein, wobei im letzteren Fall eine Transformation von Ortsgrößen in den Ortsfrequenzraum notwendig ist.

Gemäß einer vorteilhaften Ausführungsform ist eine Eventkamera vorhanden, wobei mit dieser Bildereignisse erfasst werden, die für das Training von neuronalen Netzen des Machine-Learning-Modells verwendet werden.

Die mit der Eventkamera aufgenommenen Bildereignisse liefern Zusatzinformationen zu den Bildinformationen des Bildsensors, mit welchen sich die Bewegungsunschärfe weiter verbessert kompensieren lässt.

Gemäß einer zweckmäßigen Weiterbildung der Erfindung ist dem optischen Sensor ein digitaler Zwilling zugeordnet, mittels dessen Konfigurationsdaten des optischen Sensors ermittelt und/oder optimiert werden.

Zu den Konfigurationsdaten gehören insbesondere die Netzstruktur der neuronalen Netze. Netzparameter der neuronalen Netze, Filterkoeffizienten von ggf. vorhandenen Filtern, Codetypen oder Belichtungszeiten.

Die Erfindung wird im Folgenden anhand der Zeichnungen erläutert. Es zeigen:
- Figur 1:: Beispiel einer Sensoranordnung mit dem erfindungsgemäßen optischen Sensor.
- Figur 2:: Ausführungsbeispiel des erfindungsgemäßen optischen Sensors.
- Figur 3:: Darstellung des Bildsensors und Komponenten einer Auswerteeinheit des optischen Sensors gemäß Figur 2.
- Figur 4:: 2D-Code
a) mit Bewegungsunschärfe
b) nach Entfaltung ohne Bewegungsunschärfe
- Figur 5:: Erstes Beispiel eines Machine-Learning-Modells für den optischen Sensor gemäß Figur 2.
- Figur 6:: Zweites Beispiel eines Machine-Learning-Modells für den optischen Sensor gemäß Figur 2.
- Figur 7:: Drittes Beispiel eines Machine-Learning-Modells für den optischen Sensor gemäß Figur 2.
- Figur 8:: Viertes Beispiel eines Machine-Learning-Modells für den optischen Sensor gemäß Figur 2.
- Figur 9:: Fünftes Beispiel eines Machine-Learning-Modells für den optischen Sensor gemäß Figur 2.
- Figur 10:: Sechstes Beispiel eines Machine-Learning-Modells für den optischen Sensor gemäß Figur 2.
- Figur 11:: Siebtes Beispiel eines Machine-Learning-Modells für den optischen Sensor gemäß Figur 2.
- Figur 12:: Beispiel einer Netzstruktur für das Machine-Learning-Modell gemäß Figur 5.
- Figur 13:: Beispiel einer Netzstruktur für das Machine-Learning-Modell gemäß Figur 8.
- Figur 14a:: Bild eines Bildsensors mit einem 2D-Code.
- Figur 14b:: Ereignisbild einer Eventkamera für das Bild gemäß Figur 14a.
- Figur 15:: Netzstruktur des Machine-Learning-Modells gemäß Figur 8 unter Verwendung des Ereignisbilds gemäß Figur 14b.
- Figur 16:: Sensoranordnung mit dem optischen Sensor gemäß Figur 2 und einem digitalen Zwilling.

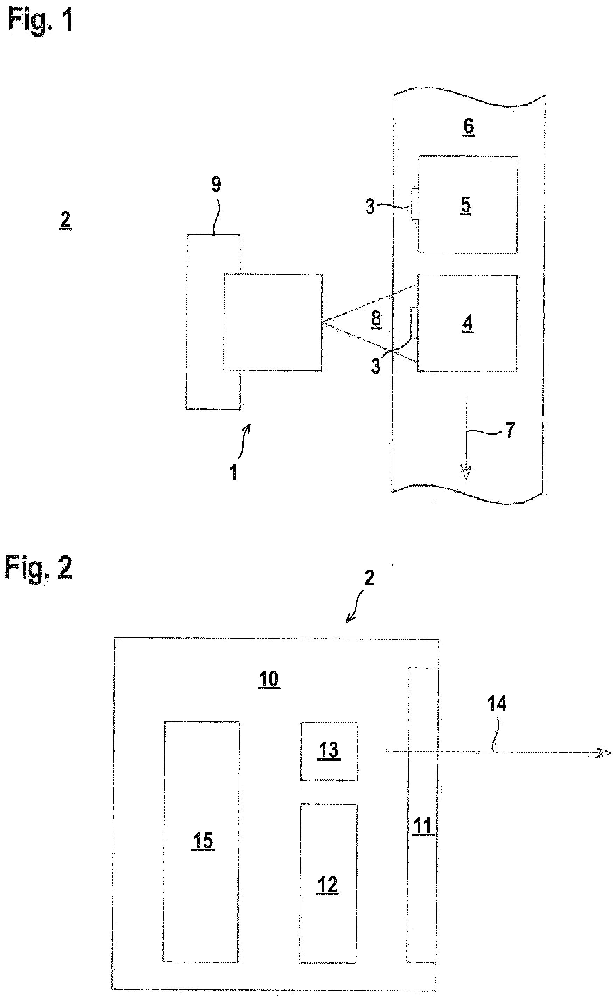

Figur 1 zeigt schematisch eine einen optischen Sensor 1 aufweisenden Sensoranordnung 2. Der in Figur 1 dargestellte erfindungsgemäße optische Sensor 1 wird insbesondere in Applikationen der Förder- und Lagertechnik eingesetzt. Der optische Sensor 1 dient zur Erfassung von Codes 3, wie z.B. 1D- oder 2D-Codes. Die Codes 3 sind im vorliegenden Fall auf Paketen 4, 5 angeordnet, die auf einem Förderband 6 in einer Bewegungsrichtung 7 am stationär angeordneten optischen Sensor 1 vorbeibewegt werden. Befindet sich ein Code 3 im Sichtfeld 8 des optischen Sensors 1, kann der Code 3 vom optischen Sensor 1 dekodiert werden. Der optische Sensor 1 kann an einer Halterung 9 so montiert sein, dass die Codes 3 innerhalb des Sichtfelds 8 des optischen Sensors 1 bewegt werden.

Figur 2 zeigt ein Ausführungsbeispiel des optischen Sensors 1. Die Komponenten des optischen Sensors 1 sind in einem Gehäuse 10 integriert, in dessen Frontwand eine transparente Frontscheibe 11 vorhanden ist. Der optische Sensor 1 weist als Empfänger einen Bildsensor 12 auf, der eine matrixförmige Anordnung von lichtempfindlichen Empfangselementen, d.h. Pixeln, aufweist. Beispielsweise kann der Bildsensor 12 in Form eines CMOS-Arrays oder CCD-Arrays ausgebildet sein.

Dem Empfänger ist eine Sendereinheit 13 zugeordnet, die Lichtstrahlen 14 emittiert und so eine Beleuchtungseinheit für den Bildsensor 12 bildet. Die Lichtstrahlen 14 werden durch die Frontscheibe 11 geführt. Von einem Code 3 reflektierendes Licht wird durch die Frontscheibe 11 zum Bildsensor 12 geführt, falls sich der Code 3 im Sichtfeld 8 des Bildsensors 12 befindet.

Weiterhin ist eine Auswerteeinheit 15 vorhanden, der Sensorsignale des Bildsensors 12 zugeführt werden. Zudem steuert die Auswerteeinheit 15 die Sendereinheit 13.

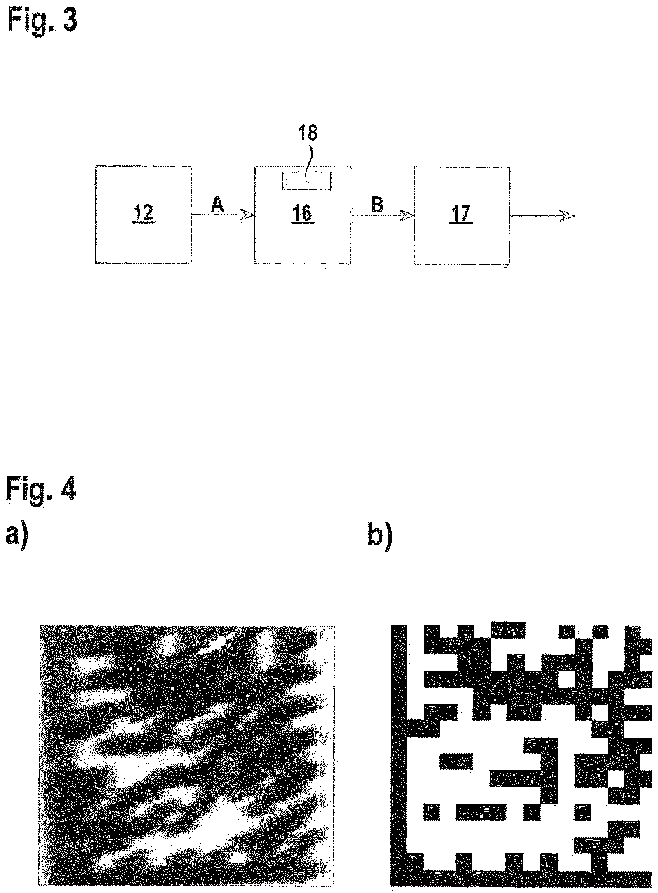

Figur 3 zeigt den Bildsensor 12 des optischen Sensors 1 mit Komponenten der Auswerteeinheit 15. Die Auswerteeinheit 15 weist ein Machine-Learning-Modell 16 und einen Decoder 17 auf. Der Decoder 17 dient zur Decodierung von Codes 3.

Die Auswerteeinheit 15 weist eine Prozessorstruktur auf, auf der ein Machine-Learning-Modell 16 in Form von Softwaremodulen implementiert ist. Die Prozessorstruktur ist an das Machine-Learning-Modell 16 angepasst und ist vorteilhaft von einer NPU (Neural Processing Unit) gebildet.

Mit dem erfindungsgemäßen optischen Sensor 1 können Codes 3 erfasst werden, die sich relativ zum optischen Sensor 1 mit unterschiedlichen Geschwindigkeiten bewegen. Durch diese Bewegung weisen Bilder von Codes 3, die mit dem Bildsensor 12 aufgenommen werden, eine Bewegungsunschärfe auf, wie beispielhaft in Figur 4a dargestellt. Durch die Bewegungsunschärfe sind die Kontrastmuster des Codes 3 im Bild des Bildsensors 12 so verschmiert und verschwommen, dass sie im Decoder 17 nicht unmittelbar erkannt und decodiert werden können.

Daher ist erfindungsgemäß dem Decoder 17 das Machine-Learning-Modell 16 vorgeordnet.

Das Machine-Learning-Modell 16 weist wenigstens ein neuronales Netz 18 auf, welches in einem Einlernbetrieb mit Trainingsdaten trainiert wird. Mit dem Machine-Learning-Modell 16 wird eine durch eine Relativbewegung eines erfassten Codes 3 relativ zum optischen Sensor 1 verursachte Bewegungsunschärfe in einem Bild des Codes 3 nach Betrag υ und Phase φ als Zwischengröße bestimmt. Mit dieser Zwischengröße wird im Machine-Learning-Modell 16 durch eine Entfaltung die im Bild des Codes 3 enthaltene Bewegungsunschärfe kompensiert.

Ein so mit dem Machine-Learning-Modell 16 bearbeitetes Bild eines Codes 3 nach der Entfaltung zeigt Figur 4b. Die Kontrastmuster in diesem Bild sind nun deutlich herausgearbeitet, so dass anhand dessen die Decodierung des Codes 3 erfolgen kann.

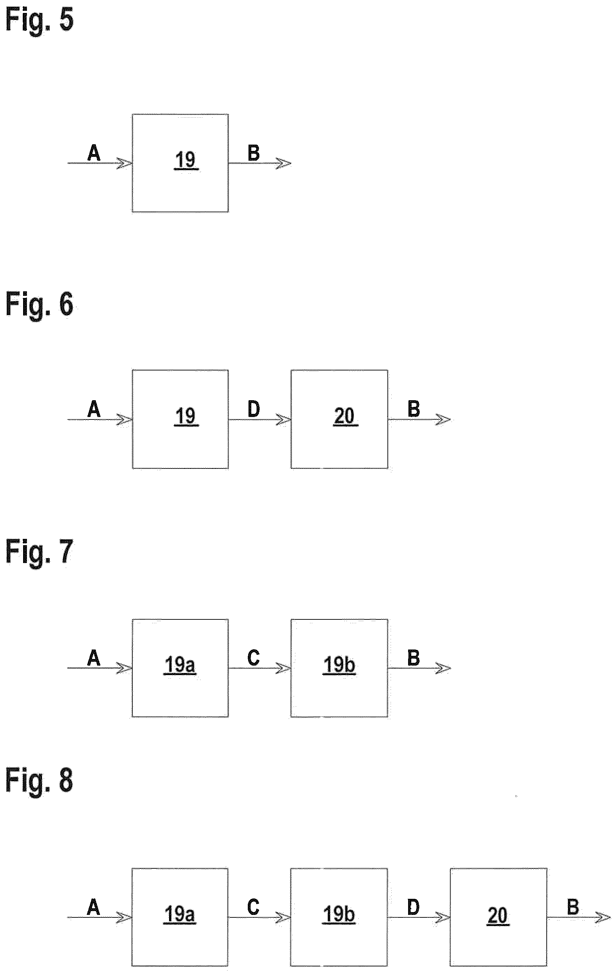

Figur 5 zeigt ein Machine-Learning-Modell 16 des optischen Sensors 1 mit nur einem neuronalen Netz 18 in Form eines CNN 19 (convolutional neural network).

Dem CNN 19 wird als Eingangsgröße ein Bild des Bildsensors 12 zugeführt.

Das CNN 19 ist ein reines Faltungsnetz (Fully Convolutional Neural Network), das über verschiedene Schichten Operationen wie Faltungen, Max Pooling, Aktivierungsfunktionen, Normalisierungen etc., durchführt. Durch Max Pooling kann die Auflösung der verarbeiteten Bilder reduziert werden.

Am Ausgang des CNN 19 liegt das entfaltete Bild B des Codes 3 an, dass im Decoder 17 decodiert werden kann.

Figur 6 zeigt eine Erweiterung der Ausführungsform des Machine-Learning-Modells 16 gemäß Figur 5. Das Machine-Learning-Modell 16 weist zusätzlich zum CNN 19 einen Classifier 20 auf, dem das im CNN 19 entfaltete Bild D zugeführt wird. Im Classifier 20 erfolgt eine Klassifikation dieses Bilds in Hell-Dunkel-Bereiche, so dass am Ausgang des Classifiers 20 ein Schwarz-Weiß-Bild B erhalten wird.

Figur 7 zeigt ein Machine-Learning-Modell 16 mit einer Reihenanordnung von zwei CNN 19a, 19b. Ein Bild A des Bildsensors 12 wird dem ersten CNN 19 zugeführt, das ein reines Faltungsnetz ist. Dort werden Feature Maps C generiert, die an das zweite CNN 19b gesendet werden. Auch das zweite CNN 19b ist ein reines Faltungsnetz.

Typischerweise kann durch das CNN 19a die Auflösung der Bilder durch Max Pooling-Operationen reduziert werden, während in CNN 19b die Auflösung der Bilder durch Upsampling oder Transposed Convolution wieder erhöht werden kann. CNN 19a kann als Encoder und CNN19b als Decoder 17 aufgefasst werden. Am Ausgang von CNN 19b liegt das gewünschte Bild B als ein Grauwertbild an.

Figur 8 zeigt eine Erweiterung der Ausführungsform gemäß Figur 7 derart, dass den beiden CNN 19a, 19b ein Classifier 20 nachgeordnet wird, mit dem wieder ein Schwarz-Weiß-Bild erzeugt wird.

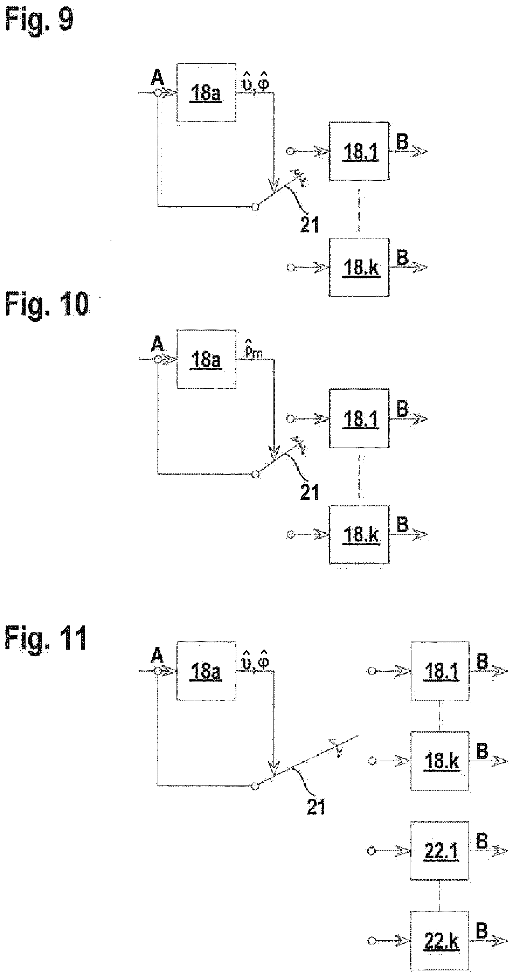

Figur 9 zeigt ein weiteres Ausführungsbeispiel eines Machine-Learning-Modells 16 des erfindungsgemäßen optischen Sensors 1.

Das Machine-Learning-Modell 16 weist ein erstes neuronales Netz 18a auf, in welchem für ein Bild A des Bildsensors 12 die Bewegungsunschärfe nach Betrag υ und Phase φ ermittelt wird. Abhängig von den so bestimmten Größen wird mittels des neuronalen Netzes 18a durch Schaltmittel 21 aus einer Anzahl von weiteren neuronalen Netzen 18.1 ... bis 18.k das für die ermittelte Bewegungsunschärfe am besten geeignete neuronale Netz 18.1, ... oder 18.k ausgewählt, mit welchem dann die Bewegungsunschärfe im Bild des Bildsensors 12 eliminiert wird, wobei das so bearbeitete Bild B dem Decoder 17 zugeführt wird.

Die weiteren neuronalen Netze 18.1 ... bis 18.k sind durch ein Training mit Trainingsdaten auf verschiedene Bereiche von Bewegungsunschärfen, d.h. Bereiche der Größen υ, φ, optimiert. Durch die Auswahl des anhand der ermittelten Bewegungsunschärfe am besten geeigneten weiteren neuronalen Netzes 18.1 ... oder 18.k gelingt eine besonders vollständige Kompensation der Bewegungsunschärfe im Bild des Bildsensors 12.

Die Anzahl k der weiteren neuronalen Netze 18.1 ... bis 18.k ist frei vorgebbar.

Figur 10 zeigt eine Variante der Ausführungsform des Machine-Learning-Modells 16 gemäß Figur 9.

Bei der Ausführungsform gemäß Figur 10 wird mit dem ersten neuronalen Netz 18a die Anzahl pₘ von Pixeln des Bildsensors 12 auf einer, vorteilhaft dem kleinsten Modul des Codes 3, bestimmt.

Abhängig von dem so bestimmten Wert pₘ erfolgt mit den Schaltmitteln 21 eine Auswahl des für diesen Wert am besten geeigneten weiteren neuronalen Netzes 18.1, ... oder 18.k aus einer Anzahl von weiteren neuronalen Netzen 18.1 ... bis 18.k des Machine-Learning-Modells 16.

Mit dem ausgewählten weiteren neuronalen Netz 18.1, ... oder 18.k erfolgt dann die Kompensierung der Bewegungsunschärfe im Bild des Bildsensors 12.

Die weiteren neuronalen Netze 18.1 ... bis 18.k sind für unterschiedliche Bereiche des Werts pₘ optimiert.

Besonders vorteilhaft werden mit dem ersten neuronalen Netz 18a nicht nur die Bewegungsunschärfe oder die Anzahl pₘ, sondern vielmehr beide Parameter bestimmt, so dass anhand der bestimmten Parameter υ, φ, pₘ eine Auswahl eines weiteren neuronalen Netzes 18.1 ... oder 18.k aus einer Anzahl von weiteren neuronalen Netzen 18.1 ... bis 18.k erfolgt.

Die weiteren neuronalen Netze 18.1 ... bis 18.k sind in diesem Fall durch ein Training mit Trainingsdaten auf unterschiedliche Bereiche der Werte υ, φ, pₘ optimiert.

Ein weiteres Ausführungsbeispiel zeigt Figur 11. Dort sind neben den weiteren neuronalen Netze 18.1 ... bis 18.k auch Filter 22.1 ... bis 22.k vorhanden, die mit den Schaltmitteln 21 ausgewählt werden können.

Mit den Filtern 22.1, ... bis 22.k gelingt eine Reduzierung des Rechenaufwands. Die Filter 22.1, ... bis 22.k können im Ortsbereich oder Ortsfrequenzbereich realisiert sein, wobei zur Realisierung im Ortsfrequenzbereich entsprechende Transformationen notwendig sind.

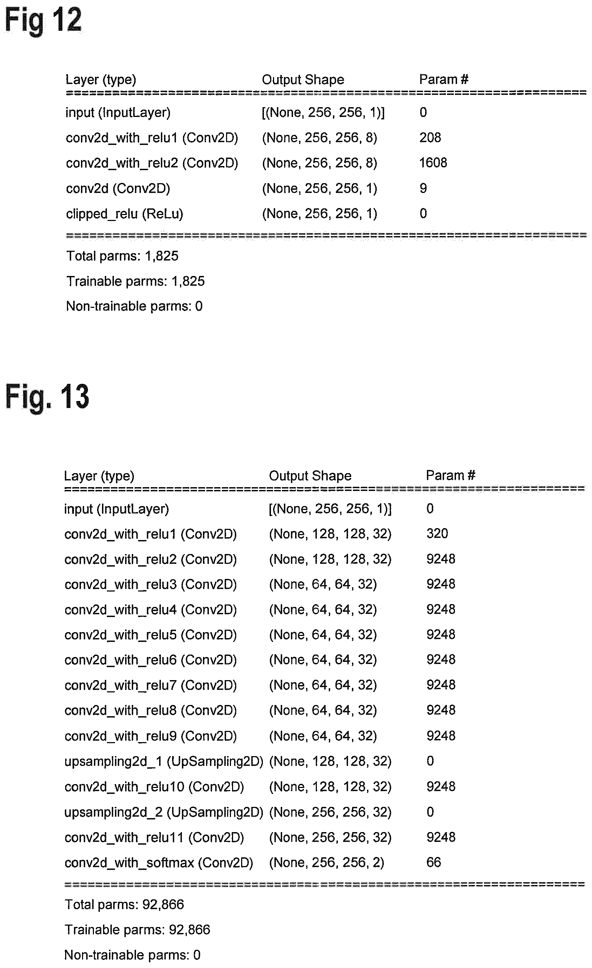

Figur 12 zeigt beispielhaft ein Diagramm einer Netzstruktur, die eine spezifische Ausführung des Machine-Learning-Modells 16 gemäß Figur 5 darstellt. Dieses Machine-Learning-Modell 16 weist nur ein CNN 19 auf.

Dabei bedeutet (input/InputLayer) = Pixelbild A, conv2d_with_relu1 (Conv2D) eine Faltungsschicht mit Aktivierungsfunktion ReLu. Diese erzeugt Zwischenbilder aus Zwischenergebnissen der Faltung. Die zweite Faltungsschicht mit der gleichen Aktivierungsfunktion ReLu erzeugt ein zweites Zwischenergebnis, die dritte Faltungsschicht erzeugt ebenso ein drittes Zwischenergebnis, wobei durch die abschließende ClipplingFunktion clipped_relu, die Pixelwerte des letzten Zwischenergebnises auf die binären Werte 0 und 1 eindeutig projiziert werden. Conv2D, relu = rectified linear unit sind Rechenvorschriften für die Eingangswerte, die die Abbildung der negativen Werte nach 0 und die Abbildung der positiven Werte nach linear transformierten positiven Werten transformieren, wodurch die Gesamtabbildung nichtlinear wird.

Die Netzstruktur gemäß Figur 12 besitzt eine sehr einfache Struktur, die für eine fixe Bewegungsunschärfe (Betrag υ_{fix}, Phase φ_{fix}) geeignet ist. Entsprechend wird dieses Netz mit entsprechenden Bildern, die einer fixen Bewegungsunschärfe ausgesetzt werden, trainiert.

Figur 13 zeigt beispielhaft ein Diagramm einer Netzstruktur, die eine spezifische Ausführung des Machine-Learning-Modells 16 gemäß Figur 8 darstellt. Dieses Machine-Learning-Modell 16 weist zwei CNN 19a, 19b und einen Classifier 20 auf.

Diese Netzstruktur ist beschrieben in "Multi-resolution convolutional neural networks for inverse problems", Feng Wang1, Alberto Eljarrat, Johannes Müller, Trond R. Henninen, Rolf Erni & Christoph T. Koch, 2020, scientific reports, nature.

(https://www.dora.lib4ri.ch/empa/islandora/object/empa%3 A221 14/datastream /PDF/Wang-2020-Multi-resolution convolutional neural networks for%28publi-shed version%29.pdf)

Eine weitere Methode der Kompensation von Bewegungsunschärfe aus Bildern des Bildsensors 12 des optischen Sensors 1 besteht im Einsatz einer Eventkamera (nicht dargestellt).

Die Eventkamera kann im optischen Sensor 1 integriert sein oder eine separate Einheit bilden.

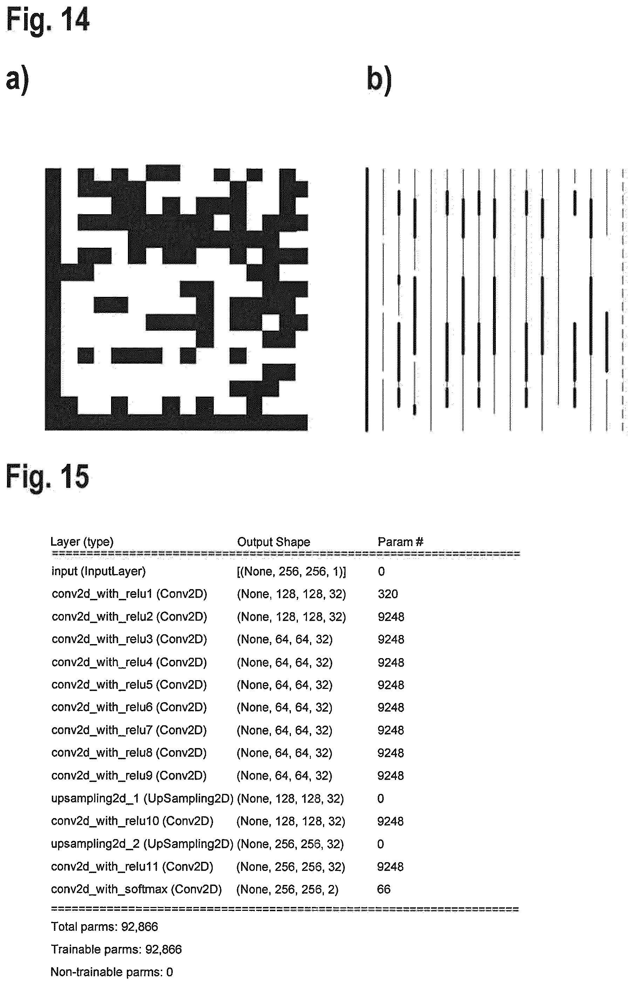

Die Eventkamera ermittelt nur Ereignisse aufgrund von zeitlichen Helligkeitsänderungen. Durch Bewegung des Bilds eines 2D-Codes, wie in Figur 14a dargestellt, werden mit der Eventkamera Bildereignisse, wie in Figur 14b dargestellt, erzeugt.

Das Bild gemäß Figur 14b kann als Eingangsbild für ein Machine-Learning-Modell 16 mit einem neuronalen Netz 18 dienen, um ein gewünschtes Ausgangsbild zu erzeugen.

Figur 15 zeigt beispielhaft ein Bereich einer Netzstruktur gemäß Figur 8, bei welcher das Ereignisbild als, gemäß Figur 14b, Eingangsbild verwendet wird.

Das Training dieses Machine-Learning-Modells 16 erfolgt mit einer Vielzahl von unterschiedlichen Bildern gemäß Figur 14b als Eingang und gemäß Figur 14a als Ausgang.

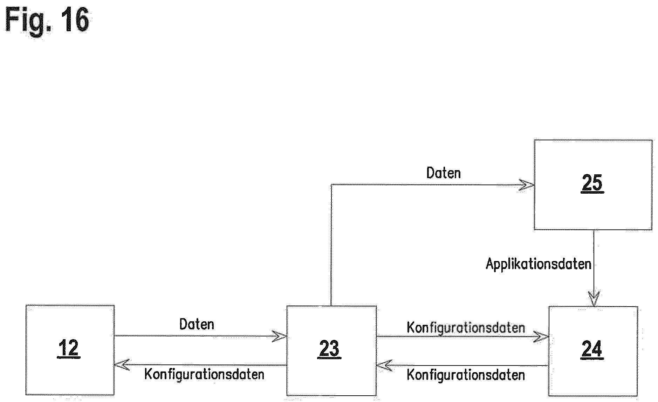

Figur 16 zeigt eine Sensoranordnung 2 für den optischen Sensor 1 gemäß Figur 2. Bei dieser Sensoranordnung 2 ist dem Bildsensor 12 des optischen Sensors 1 ein digitaler Zwilling 23 zugeordnet.

Durch den Einsatz eines digitalen Zwillings 23 eines Bildsensors 12 können Konfigurationsdaten, die u.a. Netzstruktur, Netzparameter und Filterkoeffizienten sowie Codetypen, Belichtungszeit usw. beinhalten, für die Applikation ermittelt bzw. optimiert werden.

Der Block Simulation 24 erhält die Applikationsdaten vom Block Applikationsumgebung 25. Die Applikationsdaten enthalten 3D-Daten der Fertigungsanlage mit der Position und Ausrichtung des Bildsensors 12. Zusätzlich sind die Fördergeschwindigkeit, die Beleuchtungssituation und das Sichtfeld 8 des Bildsensors 12 weitere applikationsspezifische Parameter, die für die Simulation 24 notwendig sind. Die aktuellen Konfigurationsdaten des optischen Sensors 1 werden der Simulation 24 vom digitalen Zwilling 23 zur Verfügung gestellt. Durch die Simulation 24 der Applikationsumgebung 25 mit dem optischen Sensor 1 werden die Konfigurationsdaten, z.B. Netzstruktur, Netzparameter und Filterkoeffizienten, des optischen Sensors 1 an die Anwendung angepasst bzw. optimiert. Nachdem die optimierten Konfigurationsdaten ermittelt worden sind, werden diese Daten an den digitalen Zwilling 23 übertragen. Der digitale Zwilling 23 konfiguriert danach den Bildsensor 12 mit diesen Daten.

Im Prozessbetrieb ermittelt der Bildsensor 12 Daten, z.B. Bilddaten. Diese Daten werden an den digitalen Zwilling 23 übertragen. Der digitale Zwilling 23 leitet diese Daten an den Block Applikationsumgebung 25 weiter. Die Applikationsumgebung 25 überprüft diese Daten in der Hinsicht, ob sich die Fördergeschwindigkeit, die Beleuchtung und die Ausrichtung des Bildsensors 12 verändert haben. Bei einer Veränderung wird die Simulation 24 neu angestoßen, um mit den veränderten Applikationsdaten zu überprüfen, ob die Konfigurationsdaten neu optimiert werden können. Falls die Konfigurationsdaten aktualisiert werden sollten, werden diese an den digitalen Zwilling 23 übermittelt. Der digitale Zwilling 23 leitet die aktualisierten Konfigurationsdaten an den Bildsensor 12 weiter, um eine Verbesserung der Leistungsfähigkeit des Bildsensors 12 zu erzielen.

### Bezugszeichenliste

- (1): Optischer Sensor
- (2): Sensoranordnung
- (3): Code
- (4): Paket
- (5): Paket
- (6): Förderband
- (7): Bewegungsrichtung
- (8): Sichtfeld
- (9): Halterung
- (10): Gehäuse
- (11): Frontscheibe
- (12): Bildsensor
- (13): Sendereinheit
- (14): Lichtstrahl
- (15): Auswerteeinheit
- (16): Machine-Lerning-Modell
- (17): Decoder
- (18): Neuronales Netz
- (18a): Neuronales Netz
- (18.1, ... bis 18.k): Neuronales Netz
- (19): CNN (convolutional neural network)
- (19a, b): CNN (convolutional neural network)
- (20): Classifier
- (21): Schaltmittel
- (22.1, ... bis 22.k): Filter
- (23): Zwilling
- (24): Simulation
- (25): Applikationsumgebung

## Patentansprüche

1. Optischer Sensor (1) zur Erfassung von Codes (3) mit einem Bildsensor (12), mittels dessen Bilder von Codes (3) aufgenommen werden, und mit einer einen Decoder (17) aufweisenden Auswerteeinheit (15), wobei im Decoder (17) eine Decodierung von mit dem Bildsensor (12) erfassten Codes (3) durchgeführt wird, wobei die Auswerteeinheit (15) ein Machine-Learning-Modell (16) mit wenigstens einem neuronalen Netz (18, 18a, 18.1, ... 18.k) aufweist, und wobei das neuronale Netz (18, 18a, 18.1, ... 18.k) in einem Einlernbetrieb mit Trainingsdaten trainiert wird, **dadurch gekennzeichnet, dass** mit dem Machine-Learning-Modell (16) eine durch eine Relativbewegung eines erfassten Codes (3) relativ zum optischen Sensor (1) verursachte Bewegungsunschärfe in einem Bild des Codes (3) nach Betrag (υ) und Phase (φ) als Zwischengröße bestimmt wird und mit dieser Zwischengröße im Machine-Learning-Modell (16) durch eine Entfaltung die im Bild des Codes (3) enthaltene Bewegungsunschärfe kompensiert wird, und dass das dadurch gewonnene bearbeitete Bild des Codes (3) dem Decoder (17) zugeführt wird.

2. Optischer Sensor (1) nach Anspruch 1, **dadurch gekennzeichnet, dass** mit dem Machine-Learning-Modell (16) eine Schätzung der Bewegungsunschärfe und/oder einer Code-Modulgröße eines erfassten Codes (3) durchgeführt wird, um die Entfaltung mit vermindertem Rechenaufwand durchzuführen.

3. Optischer Sensor (1) nach einem der Ansprüche 1 oder 2, **dadurch gekennzeichnet, dass** die Trainingsdaten Eingangsdaten in Form von mit dem Bildsensor (12) erfassten Bildern oder simulierten Bildern und Soll-Ausgangsdaten enthalten, und dass das Training durch eine zu minimierende Verlustfunktion erfolgt.

4. Optischer Sensor (1) nach einem der Ansprüche 1 bis 3, **dadurch gekennzeichnet, dass** das Machine-Learning-Modell (16) neuronale Netze (18, 18a, 18.1, ... 18.k) in Form von CNN (19), convolutional neural network, FCN, fully connected network, und/oder DSTN, differentiable spatio-transform neural network, aufweist.

5. Optischer Sensor (1) nach Anspruch 4, **dadurch gekennzeichnet, dass** das Machine-Learning-Modell (16) ein einzelnes CNN (19) oder eine Reihenanordnung bestehend aus zwei CNN (19a, 19b) aufweist.

6. Optischer Sensor (1) nach Anspruch 5, **dadurch gekennzeichnet, dass** dem CNN (19) oder der Reihenanordnung der CNN (19) ein einen Classifier (20) bildendes neuronales Netz (18) nachgeordnet ist.

7. Optischer Sensor (1) nach einem der Ansprüche 1 bis 6, **dadurch gekennzeichnet, dass** in einem Bild eines Codes (3) mittels eines ersten neuronalen Netzes (18a) in einem Bild des Bildsensors (12) die Anzahl pₘ von Pixeln auf einem Modul eines Codes (3) in dem Bildsensor (12) ermittelt wird, und dass mit diesem neuronalen Netz (18a) abhängig von der ermittelten Anzahl pₘ aus einer Anordnung von weiteren neuronalen Netzen (18.1, ... 18.k) ein neuronales Netz (18.1, ... oder 18.k) ausgewählt wird, mit dem die Entfaltung durchgeführt wird.

8. Optischer Sensor (1) nach Anspruch 7, **dadurch gekennzeichnet, dass** die weiteren neuronalen Netze (18.1, ... 18.k) für unterschiedliche pₘ-Wertebereiche trainiert sind.

9. Optischer Sensor (1) nach einem der Ansprüche 1 bis 8, **dadurch gekennzeichnet, dass** in einem Bild eines Codes (3) mittels eines ersten neuronalen Netzes (18a) die Bewegungsunschärfe nach Betrag (υ) und Phase (φ) in einem Bild des Bildsensors (12) ermittelt wird, und dass mit diesem neuronalen Netz (18a) abhängig von der ermittelten Bewegungsunschärfe aus einer Anordnung von weiteren neuronalen Netzen (18.1, ... 18.k) ein neuronales Netz (18.1, ... oder 18.k) ausgewählt wird, mit dem die Entfaltung durchgeführt wird.

10. Optischer Sensor (1) nach Anspruch 9, **dadurch gekennzeichnet, dass** die weiteren neuronalen Netze (18.1, ... 18.k) für unterschiedliche Bewegungsunschärfe-Bereiche trainiert sind.

11. Optischer Sensor (1) nach einem der Ansprüche 7 bis 10, **dadurch gekennzeichnet, dass** zusätzlich oder anstatt zu den weiteren neuronalen Netzen (18.1, ... 18.k) Filter (22.1, ... 22.k) vorgesehen sind, die einzeln auswählbar sind.

12. Optischer Sensor (1) nach einem der Ansprüche 1 bis 11, **dadurch gekennzeichnet, dass** eine Eventkamera vorhanden ist, wobei mit dieser Bildereignisse erfasst werden, die für das Training von neuronalen Netzen (18.1, ... 18.k) des Machine-Learning-Modells (16) verwendet werden.

13. Optischer Sensor (1) nach einem der Ansprüche 1 bis 12, **dadurch gekennzeichnet, dass** diesem ein digitaler Zwilling (23) zugeordnet ist, mittels dessen Konfigurationsdaten des optischen Sensors (1) ermittelt und/oder optimiert werden.

14. Optischer Sensor (1) nach einem der Ansprüche 1 bis 13, **dadurch gekennzeichnet, dass** das Machine-Learning-Modell (16) in Form von Software-Modulen ausgebildet ist, und dass die Auswerteeinheit (15) eine an das Machine-Learning-Modell (16) angepasste Prozessorstruktur aufweist.

15. Verfahren zur Erfassung von Codes (3) mittels eines optischen Sensors (1) mit einem Bildsensor (12), mittels dessen Bilder von Codes (3) aufgenommen werden, und mit einer einen Decoder (17) aufweisenden Auswerteeinheit (15), wobei im Decoder (17) eine Decodierung von mit dem Bildsensor (12) erfassten Codes (3) durchgeführt wird, **dadurch gekennzeichnet, dass** die Auswerteeinheit (15) ein Machine-Learning-Modell (16) mit wenigstens einem neuronalen Netz (18, 18a, 18.1, ... 18.k) aufweist, dass das neuronale Netz (18, 18a, 18.1, ... 18.k) in einem Einlernbetrieb mit Trainingsdaten trainiert wird, dass mit dem Machine-Learning-Modell (16) eine durch eine Relativbewegung eines erfassten Codes (3) relativ zum optischen Sensor (1) verursachte Bewegungsunschärfe in einem Bild des Codes (3) nach Betrag (υ) und Phase (φ) als Zwischengröße bestimmt wird und mit dieser Zwischengröße im Machine-Learning-Modell (16) durch eine Entfaltung die im Bild des Codes (3) enthaltene Bewegungsunschärfe kompensiert wird, und dass das dadurch gewonnene bearbeitet Bild des Codes (3) dem Decoder (17) zugeführt wird.

## Claims

1. Optical sensor (1) for detecting codes (3) with an image sensor (12) for capturing images of codes (3), and with an evaluation unit (15) comprising a decoder (17), wherein decoding of codes (3) detected by the image sensor (12) is performed in the decoder (17), wherein the evaluation unit (15) comprises a machine learning model (16) with at least one neural network (18, 18a, 18.1, ... 18.k), and wherein the neural network (18, 18a, 18.1, ... 18.k) is trained with training data in a training mode, **characterised in that** the machine learning model (16) is used to determine the amount (υ) and (φ) as an intermediate variable, and this intermediate variable is used in the machine learning model (16) to compensate for the motion blur contained in the image of the code (3) by means of unfolding, and that the processed image of the code (3) obtained in this way is fed to the decoder (17).

2. Optical sensor (1) according to claim 1, **characterised in that** the machine learning model (16) is used to estimate the motion blur and/or a code module size of a detected code (3) in order to perform the unfolding with reduced computational effort.

3. Optical sensor (1) according to one of claims 1 or 2, **characterised in that** the training data contains input data in the form of images captured with the image sensor (12) or simulated images and target output data, and that the training is performed by means of a loss function to be minimised.

4. Optical sensor (1) according to one of claims 1 to 3, **characterised in that** the machine learning model (16) has neural networks (18, 18a, 18.1, ... 18.k) in the form of CNN (19), convolutional neural network, fully connected network and/or DSTN differentiable spatio-transform neural network.

5. Optical sensor (1) according to claim 4, **characterised in that** the machine learning model (16) comprises a single CNN (19) or a series arrangement consisting of two CNNs (19a, 19b).

6. Optical sensor (1) according to claim 5, **characterised in that** the CNN (19) or the series arrangement of the CNNs (19) is followed by a neural network (18) forming a classifier (20).

7. Optical sensor (1) according to one of claims 1 to 6, **characterised in that**, in an image of a code (3), a first neural network (18a) in an image of the image sensor (12) determines the number pₘ of pixels on a module of a code (3) in the image sensor (12) is determined in an image of a code (3) by means of a first neural network (18a) in an image of the image sensor (12), and that, depending on the determined number pₘ from an arrangement of further neural networks (18.1, ... 18.k), a neural network (18.1, ... or 18.k) is selected with which the unfolding is carried out.

8. Optical sensor (1) according to claim 7, **characterised in that** the further neural networks (18.1, ... 18.k) are trained for different pₘ value ranges.

9. Optical sensor (1) according to one of claims 1 to 8, **characterised in that** the motion blur in terms of amount (υ) and phase (φ) in an image of the image sensor (12) is determined in an image of a code (3) by means of a first neural network (18a), and that, depending on the determined motion blur, a neural network (18.1, ... 18.k) is selected with which the unfolding is carried out.

10. Optical sensor (1) according to claim 9, **characterised in that** the further neural networks (18.1, ... 18.k) are trained for different motion blur ranges.

11. Optical sensor (1) according to one of claims 7 to 10, **characterised in that**, in addition to or instead of the further neural networks (18.1, ... 18.k), filters (22.1, ... 22.k) are provided which can be selected individually.

12. Optical sensor (1) according to one of claims 1 to 11, **characterised in that** an event camera is provided, which is used to capture image events that are used for the training of neural networks (18.1, ... 18.k) of the machine learning model (16).

13. Optical sensor (1) according to one of claims 1 to 12, **characterised in that** a digital twin (23) is assigned to it, by means of which configuration data of the optical sensor (1) are determined and/or optimised.

14. Optical sensor (1) according to one of claims 1 to 13, **characterised in that** the machine learning model (16) is designed in the form of software modules and that the evaluation unit (15) has a processor structure adapted to the machine learning model (16).

15. Method for detecting codes (3) by means of an optical sensor (1) with an image sensor (12), by means of which images of codes (3) are recorded, and with an evaluation unit (15) comprising a decoder (17), wherein decoding of codes (3) detected by the image sensor (12) is performed in the decoder (17), **characterised in that** the evaluation unit (15) has a machine learning model (16) with at least one neural network (18, 18a, 18.1, ... 18.k), that the neural network (18, 18a, 18.1, ... 18.k) is trained with training data in a training mode, that the machine learning model (16) is used to determine motion blur in an image of the code (3) caused by a relative movement of a detected code (3) relative to the optical sensor (1) is determined in terms of amount (υ) and phase (φ) as an intermediate variable, and this intermediate variable is used in the machine learning model (16) to compensate for the motion blur contained in the image of the code (3) by means of a deconvolution, and that the processed image of the code (3) obtained in this way is fed to the decoder (17).

## Revendications

1. Capteur optique (1) pour la détection de codes (3) comprenant un capteur d'images (12) permettant de prendre des photos de codes (3), et avec une unité d'évaluation (15) comportant un décodeur (17), dans lequel un décodage des codes (3) détectés par le capteur d'images (12) est effectué dans le décodeur (17), l'unité d'évaluation (15) comportant un modèle d'apprentissage automatique (16) avec au moins un réseau neuronal (18, 18a, 18.1, ... 18.k), et le réseau neuronal (18, 18a, 18.1, ... 18.k) est entraîné dans un mode d'apprentissage avec des données d'entraînement, **caractérisé en ce que** le modèle d'apprentissage automatique (16) permet de déterminer un flou de mouvement causé par un mouvement relatif d'un code détecté (3) par rapport au capteur optique (1), dans une image du code (3) en fonction de la quantité (υ) et de la phase (φ) et que, à l'aide de cette grandeur intermédiaire, le flou de mouvement contenu dans l'image du code (3) est compensé dans le modèle d'apprentissage automatique (16) par un déploiement, et que l'image traitée du code (3) ainsi obtenue est transmise au décodeur (17).

2. Capteur optique (1) selon la revendication 1, **caractérisé en ce qu'**une estimation du flou de mouvement et/ou d'une taille de module de code d'un code détecté (3) est effectuée à l'aide du modèle d'apprentissage automatique (16) afin d'effectuer le déploiement avec une charge de calcul réduite.

3. Capteur optique (1) selon l'une des revendications 1 ou 2, **caractérisé en ce que** les données d'apprentissage contiennent des données d'entrée sous forme d'images capturées par le capteur d'image (12) ou d'images simulées et des données de sortie de consigne, et **en ce que** l'apprentissage est effectué par une fonction de perte à minimiser.

4. Capteur optique (1) selon l'une des revendications 1 à 3, **caractérisé en ce que** le modèle d'apprentissage automatique (16) comporte des réseaux neuronaux (18, 18a, 18.1, ... 18.k) sous la forme d'un CNN (19), réseau neuronal convolutif, d'un réseau entièrement connecté et/ou d'un DSTN, réseau neuronal à transformation spatiale différentiable.

5. Capteur optique (1) selon la revendication 4, **caractérisé en ce que** le modèle d'apprentissage automatique (16) comprend un seul CNN (19) ou un agencement en série composé de deux CNN (19a, 19b).

6. Capteur optique (1) selon la revendication 5, **caractérisé en ce qu'**un réseau neuronal (18) formant un classificateur (20) est disposé en aval du CNN (19) ou de la série de CNN (19).

7. Capteur optique (1) selon l'une des revendications 1 à 6, **caractérisé en ce que**, dans une image d'un code (3), le nombre pₘ de pixels sur un module d'un code (3) dans le capteur d'image (12) est déterminé dans une image d'un code (3) au moyen d'un premier réseau neuronal (18a) dans une image du capteur d'image (12), et **en ce qu'**avec ce réseau neuronal (18a), en fonction du nombre p₍ₘ₎ déterminé, un réseau neuronal (18.1, ... ou 18.k) est sélectionné à partir d'un ensemble d'autres réseaux neuronaux (18.1, ... 18.k) avec lequel le déploiement est effectué.

8. Capteur optique (1) selon la revendication 7, **caractérisé en ce que** les autres réseaux neuronaux (18.1, ... 18.k) sont entraînés pour différentes plages de valeurs pₘ.

9. Capteur optique (1) selon l'une des revendications 1 à 8, **caractérisé en ce que**, dans une image d'un code (3), le flou de mouvement est déterminé en termes de quantité (υ) et de phase (φ) dans une image du capteur d'image (12), et **en ce qu'**avec ce réseau neuronal (18a), en fonction du flou de mouvement déterminé, un réseau neuronal (18.1, ... 18.k), un réseau neuronal (18.1, ... ou 18.k) est sélectionné, avec lequel le déploiement est effectué.

10. Capteur optique (1) selon la revendication 9, **caractérisé en ce que** les autres réseaux neuronaux (18.1, ... 18.k) sont entraînés pour différentes plages de flou de mouvement.

11. Capteur optique (1) selon l'une des revendications 7 à 10, **caractérisé en ce que**, en plus ou à la place des autres réseaux neuronaux (18.1, ... 18.k), des filtres (22.1, ... 22.k) sont prévus, qui peuvent être sélectionnés individuellement.

12. Capteur optique (1) selon l'une des revendications 1 à 11, **caractérisé en ce qu'**il comprend une caméra événementielle qui permet de détecter des événements visuels utilisés pour l'apprentissage automatique des réseaux neuronaux (18.1, ... 18.k) du modèle d'apprentissage automatique (16).

13. Capteur optique (1) selon l'une des revendications 1 à 12, **caractérisé en ce qu'**un jumeau numérique (23) lui est associé, à l'aide duquel les données de configuration du capteur optique (1) sont déterminées et/ou optimisées.

14. Capteur optique (1) selon l'une des revendications 1 à 13, **caractérisé en ce que** le modèle d'apprentissage automatique (16) est conçu sous la forme de modules logiciels et **en ce que** l'unité d'évaluation (15) présente une structure de processeur adaptée au modèle d'apprentissage automatique (16).

15. Procédé de détection de codes (3) à l'aide d'un capteur optique (1) avec un capteur d'images (12) permettant de prendre des photos de codes (3) et avec une unité d'évaluation (15) comportant un décodeur (17), le décodage des codes (3) détectés par le capteur d'images (12) étant effectué dans le décodeur (17), **caractérisé en ce que** l'unité d'évaluation (15) comporte un modèle d'apprentissage automatique (16) avec au moins un réseau neuronal (18, 18a, 18.1, ... 18.k), **en ce que** le réseau neuronal (18, 18a, 18.1, ... 18.k) est entraîné dans un mode d'apprentissage avec des données d'entraînement, qu'avec le modèle d'apprentissage automatique (16), un flou de mouvement causé par un mouvement relatif d'un code détecté (3) par rapport au capteur optique (1) est déterminé dans une image du code (3) est déterminé en termes de quantité (υ) et de phase (φ) comme variable intermédiaire est utilisée dans le modèle d'apprentissage automatique (16) pour compenser le flou de mouvement contenu dans l'image du code (3) par un déploiement et l'image traitée du code (3) ainsi obtenue est transmise au décodeur (17).
